(19) Europäisches Patentamt

European Patent Office

Office européen des brevets

(11) **EP 1 418 454 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*G02B 21/06* *(2006.01)*

(21) Anmeldenummer: **03104100.7**

(22) Anmeldetag: **06.11.2003**

(54) **Mikroskop und Verfahren zur Änderung des Lichtflusses in einem Mikroskop**

Microscope and method for changing the light flux in a microscope

Microscope et méthode de changement du flux lumineux dans un microscope

(84) Benannte Vertragsstaaten:
**DE FR GB**

(30) Priorität: **11.11.2002 DE 10252664**

(43) Veröffentlichungstag der Anmeldung:
**12.05.2004 Patentblatt 2004/20**

(73) Patentinhaber: **Leica Microsystems Wetzlar GmbH**
**35578 Wetzlar (DE)**

(72) Erfinder: **Weiss, Albrecht**
**35440, Linden (DE)**

(74) Vertreter: **Reichert, Werner Franz**
**Leica Microsystems AG,**
**Corporate Patents + Trademarks Department,**
**Ernst-Leitz-Strasse 17-37**
**35578 Wetzlar (DE)**

(56) Entgegenhaltungen:
**DE-A- 2 946 927      DE-A- 3 814 006**
**US-A- 4 163 150      US-A- 4 555 620**

- **SCHRÖDER G: "Technische Optik" 1990 , VOGEL BUCHVERLAG , WÜRZBURG XP002274180 ISBN: 3-8023-0067-X * Abschnitt 6.8.3. ***

**Beschreibung**

Die vorliegende Erfindung betrifft ein Mikroskop, das eine Lichtquelle mit einer zugeordneten Steuereinrichtung, eine Beleuchtungsoptik zum Beleuchten eines Objekts und eine Apertureinrichtung in einem Beleuchtungsstrahlengang aufweist, wobei mit der Apertureinrichtung die Numerische Apertur der Beleuchtungsoptik veränderbar ist und wobei mit der Steuereinrichtung der Lichtquelle die Intensität des von der Lichtquelle emittierten Lichts steuerbar ist. Die Erfindung betrifft ferner ein Verfahren zur Änderung des Lichtflusses in einem Mikroskop, das eine Lichtquelle mit einer Steuereinrichtung, eine Beleuchtungsoptik und eine Apertureinrichtung in einem Beleuchtungsstrahlengang des Mikroskops aufweist, wobei mit der Apertureinrichtung die Numerische Apertur der Beleuchtungsoptik verändert wird, und wobei mit der Steuereinrichtung der Lichtquelle die Intensität des von der Lichtquelle emittierten Lichts gesteuert wird.

Eine Veränderung der Numerischen Apertur der Beleuchtungs- oder der Abbildungsoptik bewirkt eine Veränderung der mit der optischen Abbildung erzielbaren Auflösung sowie eine Veränderung des Kontrastes des mit der optischen Abbildung erzeugten Bilds. Insbesondere bei Mikroskopen ist zur Veränderung der Numerischen Apertur der Beleuchtungsoptik eine Blende (=Apertureinrichtung) im Beleuchtungsstrahlengang angeordnet, deren Durchmesser variabel einstellbar ist. Bei einem maximalen Blendendurchmesser wird die volle Numerische Apertur eines Kondensors und eines Mikroskopobjektivs ausgeleuchtet, was eine Abbildung mit maximaler Auflösung aber geringem Kontrast liefert. Wird hingegen der Blendendurchmesser verringert beziehungsweise minimiert, liefert dann die optische Abbildung eine geringere Auflösung aber einen erhöhten Kontrast.

Bei einer Veränderung von Auflösung und Kontrast mittels der im Beleuchtungsstrahlengang vorgesehenen Blende wird jedoch auch der Lichtfluss durch den Beleuchtungsstrahlengang und in das Mikroskopobjektiv verändert, so dass die Helligkeit des Bilds sich ebenfalls verändert. Eine Verringerung des Durchmessers der Blende im Beleuchtungsstrahlengang führt daher nicht nur zu einem Bild mit geringerer Auflösung und höheren Kontrast, sondern auch zu einem dunkleren Bild.

Beim Mikroskop werden üblicherweise zwei unterschiedliche Beleuchtungsmodi angewandt, nämlich die Durchlicht- und die Auflichtbeleuchtung. Die Apertureinrichtung ist üblicherweise im Beleuchtungsstrahlengang angeordnet, mit der dann die Numerische Apertur des Beleuchtungsstrahlengangs verändert werden kann. Der Beleuchtungsstrahlengang erstreckt sich von der Lichtquelle zum Objekt. Grundsätzlich kann jedoch die Apertureinrichtung auch im Abbildungsstrahlengang angeordnet sein. So weisen beispielsweise einige Mikroskopobjektive eine interne Verstellmöglichkeit der Numerischen Apertur über eine eingebaute Irisblende auf, so dass in diesem Fall die Apertureinrichtung im Abbildungsstrahlengang angeordnet ist. Der Abbildungsstrahlengang erstreckt sich vom Objekt zum Auge des Mikroskopbedieners oder zur Bildebene einer Kamera, auf die das Objekt abgebildet wird. Im folgenden wird hauptsächlich von einem Mikroskop ausgegangen, das eine Apertureinrichtung im Beleuchtungsstrahlengang aufweist. Die Patentschrift US 4,163,150 offenbart, ein Mikroskop mit einer Apertureinrichtung im Beleuchtungsstrahlengang.

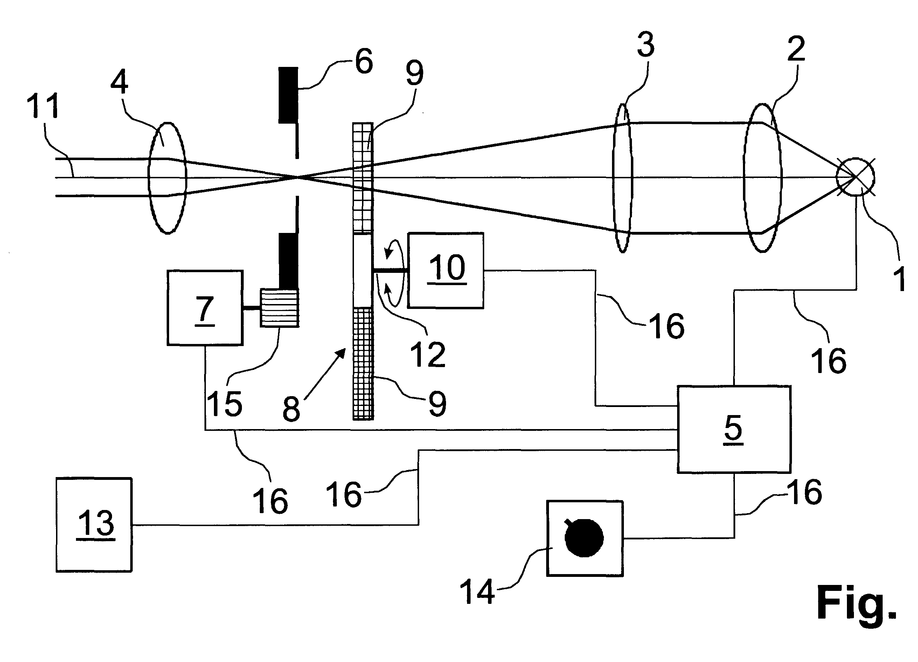

Grundsätzlich ist auch eine Mikroskopkonfiguration denkbar, bei der eine Apertureinrichtung im Abbildungsstrahlengang oder im Abbildungs- und Beleuchtungsstrahlengang angeordnet ist, so dass der Gegenstand der hier vorliegenden Erfindung sinngemäß auf diese Konfigurationen ebenfalls anwendbar ist. Die Apertureinrichtung verändert die Numerische Apertur des Strahlengangs, in dem sie angeordnet ist, und damit die Auflösung der Abbildung und den Kontrast im Bild.

Eine Veränderung der Einstellung betreffend der Auflösung und des Kontrasts des Mikroskops wird von einer Helligkeitsänderung des Mikroskopbilds überlagert. Insbesondere bei der quantitativen Mikroskopie, bei der Vergleichsmessungen unterschiedlicher Objekte durchzuführen sind, liefert eine solche Helligkeitsänderung des Mikroskopbilds verfälschte Ergebnisse. Letztendlich wird durch diese Zusammenhänge die Einstellung dieser Betriebsparameter eines Mikroskops ganz erheblich erschwert.

Insbesondere bei Glühlampen oder Halogenlampen verändert sich jedoch die Farbtemperatur beziehungsweise die spektrale Intensitätsverteilung des von der jeweiligen Lichtquelle emittierten Lichts, wenn die der Lichtquelle zugeführte elektrische Leistung verändert wird. Dies, weil Glühlampen ein einem Schwarzen Strahler ähnliches Lichtemissionsverhalten aufweisen, so dass sich die Farbtemperatur des von der Glühlampe emittierten Spektrums bei einer Reduzierung der zugeführten elektrischen Leistung vom blauen Spektralbereich aus zum roten Spektralbereich hin verschiebt, was allgemein auch als Rotverschiebung bezeichnet wird. Hierdurch ändert sich der Farbeindruck der Objektabbildung, obwohl die Objektabbildung mit dem erfindungsgemäßen Mikroskop eine nahezu unveränderte Helligkeit aufweist.

Der vorliegenden Erfindung liegt daher die Aufgabe zugrunde, ein Mikroskop anzugeben und weiterzubilden, das bei einer Veränderung der Numerischen Apertur der Beleuchtungsoptik die Helligkeit und den Farbeindruck der Objektabbildung konstant hält.

Das erfindungsgemäße Mikroskop der gattungsbildenden Art löst die voranstehende Aufgabe durch die kennzeichnenden Merkmale des Patentanspruchs 1. Danach ist ein solches Mikroskop dadurch gekennzeichnet,

- dass bei einer Veränderung der Numerischen Apertur durch die Apertureinrichtung gleichzeitig die Lichtquelle durch die Steuereinrichtung der Lichtquelle derart ansteuerbar ist, dass der Lichtfluss durch die Beleuchtungsoptik im wesentlichen unverändert bleibt,

- und dass ein spektrales Korrekturmittel im Beleuchtungs- oder Abbildungsstrahlengang angeordnet ist, mit dem eine aufgrund der Ansteuerung der Lichtquelle durch die Steuereinrichtung hervorgerufene Veränderung der spektralen Intensitätsverteilung des von der Lichtquelle emittierten Lichts derart korrigierbar ist, dass die spektrale Intensitätsverteilung des auf das Objekt gerichteten Lichts zumindest weitgehend unverändert bleibt.

Der Erfindung liegt weiterhin die Aufgabe zugrunde, ein Verfahren zur Änderung des Lichtflusses in einem Mikroskop anzugeben, mit welchem bei einer Veränderung der Numerischen Apertur der Beleuchtungsoptik die Helligkeit und der Farbeindruck der Objektabbildung konstant gehalten werden. Diese Aufgabe wird gelöst durch ein Verfahren mit den Merkmalen des Oberbegriffs des Anspruchs 15, welches gekennzeichnet ist durch die Verfahrensschritte:

- dass bei einer Veränderung der Numerischen Apertur durch die Apertureinrichtung gleichzeitig die Lichtquelle durch die Steuereinrichtung der Lichtquelle derart angesteuert wird, dass der von der Beleuchtungsoptik durchsetzte Lichtfluss im wesentlichen unverändert bleibt,

- und dass eine Veränderung der spektralen Intensitätsverteilung des von der Lichtquelle emittierten Lichts, die aufgrund der Ansteuerung der Lichtquelle durch die Steuereinrichtung der Lichtquelle hervorgerufen wird, derart korrigiert wird, dass die spektrale Intensitätsverteilung des auf das Objekt gerichteten Lichts zumindest weitgehend unverändert bleibt.

Die Auflösung und der Kontrast einer optischen Abbildung können ohne Auswirkungen auf die Helligkeit der Abbildung des Objekts verändert werden, wenn gleichzeitig die Lichtquelle angesteuert oder geregelt wird. Hierbei ist die Lichtquelle derart anzusteuern, dass der von der Beleuchtungsoptik durchsetzte Lichtfluss bei einer Veränderung der Numerischen Apertur im wesentlichen unverändert bleibt, falls die Apertureinrichtung im Beleuchtungsstrahlengang angeordnet ist. Entsprechendes gilt für den Fall, dass die Apertureinrichtung im Abbildungsstrahlengang angeordnet ist.

Zur Beibehaltung des Farbeindrucks der Objektabbildung ist in erfindungsgemäßer Weise ein spektrales Korrekturmittel vorgesehen. Mit diesem ist eine aufgrund der Ansteuerung der Lichtquelle durch die Steuereinrichtung der Lichtquelle hervorgerufene Veränderung der spektralen Intensitätsverteilung des von der Lichtquelle emittierten Lichts derart korrigierbar ist, dass die spektrale Intensitätsverteilung des auf das Objekt gerichteten Lichts zumindest weitgehend unverändert bleibt. Insoweit wird hierdurch sichergestellt, dass eine Veränderung der Numerischen Apertur der Beleuchtungs- oder der Abbildungsoptik weder eine Helligkeitsveränderung noch eine unerwünschte Farbveränderung des Objektbilds hervorruft.

Eine Veränderung der Numerischen Apertur des Beleuchtungsstrahlengangs könnte beispielsweise mit einer Blende realisiert werden, deren Blendendurchmesser veränderbar ist (Irisblende). Wird beispielsweise der Durchmesser der Blende von einem Wert D auf einen Wert d verändert, so bewirkt das eine Veränderung der Helligkeit des resultierenden Bilds um den Faktor

$$(d/D)^2 \, .$$

Um diesen Faktor ist letztendlich die Intensität des Lichts der Lichtquelle zu erhöhen oder zu verringern, je nach dem, ob der Blendendurchmesser vergrößert oder verringert wurde. Hierdurch kann in ganz besonders vorteilhafter Weise sichergestellt werden, dass bei der optischen Abbildung gleichbleibende Helligkeitsverhältnisse vorliegen. In dem obengenannten Beispiel liegt eine Durchlichtbeleuchtung des Objekts vor und die Veränderung der Intensität des Lichts der Lichtquelle um den Faktor

$$(d/D)^2$$

bewirkt einen unveränderten Lichtfluss, der die Beleuchtungsoptik durchsetzt.

Beispielsweise könnte das Objekt mit einem Mikroskopobjektiv mit integrierter Irisblende beobachtet werden. Dann könnte die Numerische Apertur der Optik durch eine Verstellung der integrierten Irisblende bewirkt werden. Zur Realisierung einer helligkeitsneutralen Abbildung in diesem Fall könnte ein entsprechender Decoder beim Mikroskopobjektiv vorgesehen sein, der den momentan eingestellten Wert der Numerischen Apertur des Mikroskopobjektivs ausliest und anhand dessen die Lichtquelle entsprechend angesteuert beziehungsweise geregelt wird.

In Abhängigkeit der Genauigkeit, mit der die Helligkeit des Objektbilds gesteuert beziehungsweise geregelt werden soll, kann es erforderlich sein, einen im Abbildungs- oder im Beleuchtungsstrahlengang angeordneten lichtempfindlichen Detektor vorzusehen. Dieser Detektor ist derart angeordnet, dass er zumindest einen Teil des die Beleuchtungsoptik durchsetzenden Lichtflusses detektiert und dass er ein davon abhängiges Signal erzeugt, das zur Steuerung oder Regelung der Lichtquelle nutzbar ist. Bei diesem Detektor könnte es sich beispielsweise um eine Photodiode handeln, wobei einen Teil des Lichts beispielsweise durch das Einfügen einer Glasplatte in dem jeweiligen Strahlengang - z.B.

im Winkel von 45 Grad zur optischen Achse - ausgekoppelt und auf die Photodiode gerichtet werden kann. Durch diese Maßnahme kann in vorteilhafter Weise eine objektive Helligkeitsregelung des Bilds erfolgen, ohne das es auf einen subjektiven Eindruck eines Mikroskopdieners ankommt.

Im Konkreten könnte die Apertureinrichtung eine Blende umfassen, deren Blendendurchmesser veränderbar ist, beispielsweise eine Irisblende. Insoweit handelt es sich hierbei um Standardkomponenten, die in der Optik eingesetzt werden, so dass die Materialkosten hierzu gering gehalten werden können. Vorzugsweise wird die Veränderung des Blendendurchmessers durch einen Motor bewirkt. Dies ermöglicht bei entsprechender Motorsteuerung und Kalibrierung Rückschlüsse darauf, welcher Blendendurchmesser momentan eingestellt ist. Als Motor werden bevorzugt Schrittmotoren eingesetzt.

In den meisten Fällen ist die Lichtquelle elektrisch gespeist. Die Steuereinrichtung der Lichtquelle steuert die Lichtquelle durch eine Veränderung der zugeführten elektrischen Leistung, wodurch sich die Leistung des von der Lichtquelle emittierten Lichts verändert. Als Lichtquelle kommen beispielsweise Glühlampen oder Halogenlampen zum Einsatz, wobei die Steuereinrichtung den durch die Lichtquelle fließenden elektrischen Strom erhöht oder erniedrigt.

Das spektrale Korrekturmittel könnte grundsätzlich im Beleuchtungsstrahlengang oder im Abbildungsstrahlengang angeordnet sein. Üblicherweise wird eine Anordnung des spektralen Korrekturmittels im Beleuchtungsstrahlengang bevorzugt, da das spektrale Korrekturmittel beispielsweise durch einen Filter mit einer strukturierten Beschichtung gebildet sein könnte, was zu Abbildungsartefakten führen könnte, wenn es im Abbildungsstrahlengang angeordnet wäre.

Das spektrale Korrekturmittel könnte einen optischen Filter umfassen, der gemäß der deutschen Patentanmeldung DE 101 32 360.3-42 ausgebildet ist.

In einer konkreten Ausführungsform umfasst das spektrale Korrekturmittel ein Filter, das als Absorptionsfilter ausgebildet ist. Es weist mehrere in den Beleuchtungsstrahlengang einbringbare Wirkpositionen mit unterschiedlichen Dicken auf, wobei sich das spektrale Transmissionsvermögen des Filters als Funktion der Dicke ändert. Ein solches Filter kann als keilförmige Platte oder Scheibe ausgeführt sein, wobei die minimale und die maximale Dicke des Filters derart zu wählen sind, dass das spektrale Transmissionsvermögen des Filters eine minimale und eine maximale Veränderung der spektralen Intensitätsverteilung des von der Lichtquelle emittierten Lichts bewirkt.

Alternativ hierzu könnte das spektrale Korrekturmittel ein Interferenzfilter oder ein Reflexionsfilter umfassen, das über seinen in den Beleuchtungsstrahlengang anordenbaren Wirkpositionen entsprechenden Filterflächen ein unterschiedliches spektrales Interferenzoder Reflexionsvermögen aufweist. So könnte das Interferenzfilter beispielsweise in Form einer transparenten Glasplatte ausgeführt sein, die eine Interferenz-Filterschicht aufweist, deren spektrales Transmissionsvermögen über ihre Fläche hinweg von einem minimalen zu einem maximalen Wert zunimmt. In Abhängigkeit der Positionierung dieses Filters relativ zum Beleuchtungsstrahlengang kann ein entsprechendes spektrales Transmissionsvermögen des Filters eingestellt werden.

In beiden Fällen könnte das spektrale Transmissionsvermögen des Filters sich kontinuierlich oder diskontinuierlich, also insbesondere stufenförmig, verändern. Insbesondere ein in Form einer keilförmigen Platte ausgeführter Absorptionsfilter weist ein kontinuierlich sich veränderndes spektrales Transmissionsvermögen auf. Ein Reflexions- oder Interferenzfilter könnte hingegen unterschiedliche Bereiche aufweisen, in denen jeweils ein konstanter Wert des spektralen Transmissionsvermögens vorliegt.

Eine Veränderung der spektralen Intensitätsverteilung des von der Lichtquelle emittierten Lichts könnte nun durch eine Relativbewegung des spektralen Korrekturmittels zum Beleuchtungsstrahlengang erzielt werden, und zwar insbesondere im Fall der obengenannten Filter. Vorzugsweise wird eine solche Relativbewegung durch einen Motor bewirkt, der das Filter in seine jeweiligen Wirkpositionen verbringt. Auch hierbei werden bevorzugt Schrittmotoren eingesetzt.

Als Relativbewegung des spektralen Korrekturmittels ist insbesondere ein Verschieben eines linear ausgebildeten Filters oder ein Drehen eines kreisscheibenförmig ausgebildeten Filters vorgesehen. Eine entsprechende Führung des Filters, beispielsweise in Form eines als Drehachse dienenden Stifts, ist ortsfest an dem Mikroskop angebracht.

Im Rahmen einer Automatisierung der Bedienung des Mikroskops werden bei einer bevorzugten Ausführungsform die vorgesehenen Wirkpositionen des spektralen Korrekturmittels in einer Datenspeichereinheit abgespeichert. Diese Datenspeichereinheit könnte beispielsweise in Form eines RAM-Bausteins ausgeführt sein, der sich auf einer dem Mikroskop zugeordneten elektronischen Steuerplatine befindet. Selbstverständlich sind die abgespeicherten Wirkpositionen des spektralen Korrekturmittels aus der Datenspeichereinheit auch auslesbar, so dass ein einer vorgesehenen Wirkposition entsprechender Wert zur Durchführungen der Relativbewegung des spektralen Korrekturmittels aus der Datenspeichereinheit ausgelesen werden kann.

Das spektrale Korrekturmittel könnte derart ausgebildet sein, dass damit die Lichtintensität des grünen und insbesondere des roten Spektralbereichs des von der Lichtquelle emittierten Lichts beeinflussbar ist. Insoweit wäre das spektrale Korrekturmittel mit seinem den entsprechenden Spektralbereich des von der Lichtquelle emittierten Lichts stärker absorbierenden Bereich in seine Wirkposition zu bringen, wenn die der Lichtquelle zugeführte elektrische Leistung verringert wird und somit sich der spektrale Intensitätsverlauf des von der Lichtquelle emittierten Lichts sich zum Roten hin verschiebt.

Grundsätzlich ist es ausreichend, den grünen und insbesondere den roten Spektralbereich des Lichts der Lichtquelle zu beeinflussen. Der blaue Spektralbereich bleibt zur Erzielung einer farbneutralen Helligkeitsveränderung weitgehend unverändert.

Im Konkreten umfasst das spektrale Korrekturmittel eine Steuereinrichtung, die bevorzugt gleichzeitig mit der Steuereinrichtung der Lichtquelle und/oder die Apertureinrichtung angesteuert wird. Die Steuereinrichtung des spektralen Korrekturmittels steuert beispielsweise den Motor an, der das spektrale Korrekturmittel in seine Wirkposition bringt. Durch die gleichzeitige Ansteuerung des spektralen Korrekturmittels und der Steuereinrichtung der Lichtquelle wird in vorteilhafter Weise bei einer Veränderung der Intensität des von der Lichtquelle emittierten Lichts eine damit verbundenen Veränderung des Farbeindrucks bei einer Abbildung kompensiert. Wird beispielsweise die Intensität des von der Lichtquelle emittierten Lichts erhöht, (bzw. erreicht), wird gleichzeitig die hiermit verbundene spektrale Blauverschiebung (bzw. Rotorverschiebung) des Lichts durch das spektrale Korrekturmittel kompensiert.

Weiterhin ist erfindungsgemäß eine gleichzeitige Ansteuerung der Apertureinrichtung vorgesehen, so dass bei einer Veränderung der Apertur die beiden anderen Parameter, d.h. die Lichtintensität der Lampe und die Position des spektralen Korrekturmittels, entsprechend angesteuert beziehungsweise geregelt werden.

Zur konkreten Realisierung der gleichzeitigen Veränderung dieser Parameter könnte die Apertureinrichtung, die Steuereinrichtung der Lichtquelle und/oder die Steuereinrichtung des spektralen Korrekturmittels von einem Steuerrechner angesteuert oder geregelt werden. Als Steuerrechner könnte beispielsweise ein herkömmlicher Personalcomputer oder ein Notebook dienen, im Fall eines Mikroskops könnte der Steuerrechner auch auf einer Platine realisiert sein, die im Mikroskopstativ oder einem dem Mikroskop zugeordneten Steuergerät untergebracht ist.

Es gibt nun verschiedene Möglichkeiten, die Lehre der vorliegenden Erfindung in vorteilhafter Weise auszugestalten und weiterzubilden. Dazu ist einerseits auf die unabhängigen Patentansprüchen nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige

Fig.   eine schematische Darstellung eines erfindungsgemäßen Ausführungsbeispiels der vorliegenden Erfindung.

Die einzige Fig. zeigt einen Teil eines Mikroskops, nämlich einen Teil eines Beleuchtungsstrahlengangs. Das in der Fig. nicht eingezeichnete Objekt - es würde sich links in Fortsetzung der optischen Achse 11 des Beleuchtungsstrahlengangs befinden - wird mit dem Licht der Lichtquelle 1 beleuchtet. Hierzu ist eine Beleuchtungsoptik vorgesehen, die das Licht der Lichtquelle 1 in Richtung des Objekts leitet und von der die Linsen 2, 3, 4 gezeigt sind.

Eine einem Steuerrechner 5 zugeordnete Steuereinrichtung der Lichtquelle 1 steuert die Intensität des von der Lichtquelle 1 emittierten Lichts. Eine Apertureinrichtung 6 ist in dem Beleuchtungsstrahlengang des Mikroskops angeordnet, wobei mit der Apertureinrichtung 6 die Numerische Apertur und damit die Auflösung und der Kontrast der Abbildung verändert wird.

Die Apertureinrichtung 6 umfasst eine Blende, deren Blendendurchmesser durch einen der Apertureinrichtung 6 zugeordneten Motor 7 und einem Antriebsritzel 15 veränderbar ist.

Bei einer Veränderung der Numerischen Apertur der Beleuchtungsoptik durch die Apertureinrichtung 6 wird gleichzeitig die Lichtquelle 1 durch die Steuereinrichtung der Lichtquelle 1 derart angesteuert, dass der die Beleuchtungsoptik durchsetzende Lichtfluss im wesentlichen unverändert bleibt.

Erfindungsgemäß ist zusätzlich ein spektrales Korrekturmittel 8 vorgesehen, mit dem eine aufgrund der Ansteuerung der Lichtquelle 1 durch die Steuereinrichtung der Lichtquelle 1 hervorgerufene Veränderung der spektralen Intensitätsverteilung des von der Lichtquelle 1 emittierten Lichts derart korrigiert wird, sodass die spektrale Intensitätsverteilung des auf das Objekt gerichteten Lichts zumindest weitgehend unverändert bleibt.

Das spektrale Korrekturmittel 8 ist im Beleuchtungsstrahlengang angeordnet und umfasst ein Filter 9, das als kreisscheibenförmiges Interferenzfilter ausgebildet ist und der über seinen in den Beleuchtungsstrahlengang einbringbaren Wirkpositionen entsprechenden Filterflächen ein unterschiedliches spektrales Interferenzvermögen und ein damit verbundenes unterschiedliches spektrales Transmissionsvermögen aufweist. Die unterschiedlich ausgestalteten Filterflächen sind mit unterschiedlichen Schraffuren angedeutet.

Eine Veränderung der spektralen Intensitätsverteilung des von der Lichtquelle 1 emittierten Lichts wird durch eine Relativbewegung des Filters 9 des spektralen Korrekturmittels 8 zum Beleuchtungsstrahlengang erzielt. Bei dieser Relativbewegung handelt es sich um eine Drehung, die von dem Motor 10 bewirkt wird. Der kreisscheibenförmige Filter 9 ist auf der Motorachse 12 angebracht. Die vorgesehenen Wirkpositionen des Filters 9 des spektralen Korrekturmittels 8 sind in einer Datenspeichereinheit des Steuerrechners 5 abgespeichert.

Das spektrale Korrekturmittel 8 umfasst eine dem Steuerrechner 5 zugeordnete Steuereinrichtung, die gleichzeitig mit der Steuereinrichtung der Lichtquelle 1 und der Apertureinrichtung 6 angesteuert wird.

Die Apertureinrichtung 6, die Steuereinrichtung der Lichtquelle 1 und die Steuereinrichtung des spektralen Korrekturmittels 8 sind von dem Steuerrechner 5 ansteuerbar beziehungsweise regelbar. Der Steuerrechner 5 ist von einem Personal Computer 13 bedienbar. Darüber hinaus kann mit dem Drehschalter 14 der Durchmesser der Blende der Apertureinrichtung 6 direkt eingestellt werden. Diese Einstellung wird über den Steuerrechner 5 und den Motor 7 der Apertureinrichtung 6 realisiert. Gleichzeitig errechnet der Steuerrechner 5 die der Lichtquelle 1 zuzuführende elektrische Leistung derart, dass das Objekt im wesentlichen mit derselben Lichtleistung beleuchtet wird, und führt die entsprechende elektrische Leistung der Lichtquelle 1 zu. Ebenfalls gleichzeitig errechnet der Steuerrechner 5 die Stellung des Filters 9 des spektralen Korrekturmittels 8 in der Weise, dass bei veränderter Lichtleistung eine nahezu unveränderte spektrale Intensitätsverteilung des auf das Objekt gerichteten Lichts vorliegt. Die Verbindungsleitungen 16 verlaufen jeweils zwischen dem Steuerrechner 5 einerseits und der Lichtquelle 1, dem Motor 7 der Apertureinrichtung 6, dem Motor 10 des spektralen Korrekturmittels 8, dem Personal Computer 13 und dem Drehschalter 14 andererseits.

**Bezugszeichenliste**

| | |
|---|---|
| 1 | Lichtquelle |
| 2 | Linse |
| 3 | Linse |
| 4 | Linse |
| 5 | Steuerrechner |
| 6 | Apertureinrichtung |
| 7 | Motor von (6) |
| 8 | spektrales Korrekturmittel |
| 9 | Filter von (8) |
| 10 | Motor von (8) |
| 11 | optische Achse des Beleuchtungsstrahlengangs |
| 12 | Motorachse von (10) |
| 13 | Personal Computer |
| 14 | Drehschalter |
| 15 | Antriebsritzel von (7) |
| 16 | Verbindungsleitung |

**Patentansprüche**

1. Mikroskop, das eine Lichtquelle (1) mit einer zugeordneten Steuereinrichtung, eine Beleuchtungsoptik (2, 3, 4) zum Beleuchten eines Objekts und eine Apertureinrichtung (6) in einem Beleuchtungsstrahlengang aufweist, wobei mit der Apertureinrichtung (6) die Numerische Apertur der Beleuchtungsoptik (2, 3, 4) veränderbar ist und wobei mit der Steuereinrichtung der Lichtquelle (1) die Intensität des von der Lichtquelle (1) emittierten Lichts steuerbar ist, **dadurch gekennzeichnet,**

- **dass** bei einer Veränderung der Numerischen Apertur durch die Apertureinrichtung (6) gleichzeitig die Lichtquelle (1) durch die Steuereinrichtung der Lichtquelle (1) derart ansteuerbar ist, dass der Lichtfluss durch die Beleuchtungsoptik (2, 3, 4) im wesentlichen unverändert bleibt,
- **und dass** ein spektrales Korrekturmittel (8) im Beleuchtungs- oder Abbildungsstrahlengang angeordnet ist, mit dem eine aufgrund der Ansteuerung der Lichtquelle (1) durch die Steuereinrichtung hervorgerufene Veränderung der spektralen Intensitätsverteilung des von der Lichtquelle (1) emittierten Lichts derart korrigierbar ist, dass die spektrale Intensitätsverteilung des auf das Objekt gerichteten Lichts zumindest weitgehend unverändert bleibt.

2. Mikroskop nach Anspruch 1, **gekennzeichnet durch** einen im Mikroskop-Strahlengang angeordneten lichtempfindlichen Detektor, der zumindest einen Teil des die Beleuchtungsoptik durchsetzenden Lichtflusses detektiert und ein davon abhängiges Signal erzeugt, das zur Steuerung oder Regelung der Lichtquelle und/oder des spektralen Korrekturmittels (8) nutzbar ist.

3. Mikroskop nach Anspruch 1 oder 2, **dadurch gekennzeichnet, dass** die Apertureinrichtung (6) eine Blende umfasst, deren Blendendurchmesser veränderbar ist, vorzugsweise bewirkbar durch einen Motor (7).

4. Mikroskop nach einem der Ansprüche 1 bis 3, **dadurch gekennzeichnet, dass** die Lichtquelle (1) elektrisch gespeist ist und dass die Steuereinrichtung der Lichtquelle (1) die der Lichtquelle (1) zugeführte elektrische Leistung verändert.

5. Mikroskop nach Anspruch 1, **dadurch gekennzeichnet, dass** das spektrale Korrekturmittel (8) ein Filter umfasst, das als Absorptionsfilter ausgebildet ist, dessen im Beleuchtungsstrahlengang anordenbare Wirkpositionen jeweils unterschiedliche Dicken aufweisen und dass sich das spektrale Transmissionsvermögen des Filters als Funktion der Dicke ändert und dass das spektrale Transmissionsvermögen des Filters (9) sich kontinuierlich oder diskontinuierlich, insbesondere stufenförmig, verändert.

6. Mikroskop nach Anspruch 1, **dadurch gekennzeichnet, dass** das spektrale Korrekturmittel (8) ein Interferenzfilter (9) oder ein Reflexionsfilter umfasst, das über seinen im Beleuchtungsstrahlengang anordenbaren Wirkpositionen entsprechenden Filterflächen ein unterschiedliches spektrales Interferenz- oder Reflexionsvermögen aufweist und dass das spektrale Transmissionsvermögen des Filters (9) sich kontinuierlich oder diskontinuierlich, insbesondere stufenförmig, verändert.

7. Mikroskop nach einem der Ansprüche 5 bis 6 , **dadurch gekennzeichnet, dass** eine Veränderung der spektralen Intensitätsverteilung des von der Lichtquelle (1) emittierten Lichts durch eine Relativbewegung des spektralen Korrekturmittels (8) zum Beleuchtungsstrahlengang erzielbar ist, vorzugsweise bewirkbar durch einen Motor (10).

8. Verfahren zur Änderung des Lichtflusses in einem Mikroskop, das eine Lichtquelle (1) mit einer Steuereinrichtung, eine Beleuchtungsoptik (2, 3, 4) und eine Apertureinrichtung (6) in einem Beleuchtungsstrahlengang des Mikroskops aufweist,

   - wobei mit der Apertureinrichtung (6) die Numerische Apertur der Beleuchtungsoptik (2, 3, 4) verändert wird,
   - und wobei mit der Steuereinrichtung der Lichtquelle (1) die Intensität des von der Lichtquelle (1) emittierten Lichts gesteuert wird,

   **dadurch gekennzeichnet,**

   - **dass** bei einer Veränderung der Numerischen Apertur durch die Apertureinrichtung (6) gleichzeitig die Lichtquelle (1) durch die Steuereinrichtung der Lichtquelle (1) derart angesteuert wird, dass der von der Beleuchtungsoptik (2, 3, 4) durchsetzte Lichtfluss im wesentlichen unverändert bleibt,
   - und **dass** eine Veränderung der spektralen Intensitätsverteilung des von der Lichtquelle (1) emittierten Lichts, die aufgrund der Ansteuerung der Lichtquelle (1) durch die Steuereinrichtung der Lichtquelle (1) hervorgerufen wird, derart korrigiert wird, dass die spektrale Intensitätsverteilung des auf das Objekt gerichteten Lichts zumindest weitgehend unverändert bleibt.

9. Verfahren nach Anspruch 8 , **dadurch gekennzeichnet, dass** zumindest ein Teil des die Beleuchtungsoptik durchsetzenden Lichtflusses detektiert und ein davon abhängiges Signal erzeugt wird, das zur Steuerung oder Regelung der Lichtquelle oder zur Korrektur der spektralen Intensitätsverteilung des von der Lichtquelle (1) emittierten Lichts nutzbar ist.

10. Verfahren nach einem der Ansprüche 8 bis 9, **dadurch gekennzeichnet, dass** eine Veränderung der spektralen Intensitätsverteilung des von der Lichtquelle (1) emittierten Lichts erzeugt wird, indem ein spektrales Korrekturmittel (8) relativ zum Beleuchtungsstrahlengang bewegt wird.

## Claims

1. Microscope that comprises a light source (1) having an associated control device, an illuminating optical system (2, 3, 4) for illuminating a specimen and an aperture device (6) in an illumination beam path, the numerical aperture of the illuminating optical system (2, 3, 4) being modifiable with the aperture device (6), and the intensity of the light emitted by the light source (1) being controllable with the control device of the light source (1), **characterized in that**

   - upon a modification of the numerical aperture by means of the aperture device (6), the light source (1) is simultaneously controllable by the control device of the light source (1) in such a way that the light flux through the illuminating optical system (2, 3, 4) remains substantially unmodified; and
   - there is arranged in the illumination or imaging beam path a spectral correction means (8) with which a modification of the spectral intensity distribution of the light emitted by the light source (1), brought about because of the controlling of the light source (1) by the control device, is correctable in such a way that the spectral intensity distribution of the light directed onto the specimen remains at least largely unmodified.

2. Microscope according to Claim 1, **characterized by** a light-sensitive detector, arranged in the microscope beam path, that detects at least a portion of the light flux passing through the illuminating optical system and generates, as a function thereof, a signal that is usable for open- or closed-loop control of the light source and/or of the spectral correction means (8).

3. Microscope according to Claim 1 or 2, **characterized in that** the aperture device (6) encompasses an aperture whose diameter is modifiable, preferably can be effected by a motor (7).

4. Microscope according to one of Claims 1 to 3, **characterized in that** the light source (1) is powered electrically and the control device of the light source (1) modifies the electrical power delivered to the light source (1).

5. Microscope according to Claim 1, **characterized in that** the spectral correction means (8) encompasses a filter that is embodied as an absorption filter, whose working positions that can be arranged in the illumination beam path each have different thicknesses and the spectral transmittance of the filter changes as a function of thickness and **in that** the spectral transmittance of the filter (9) changes continuously or discontinuously, in particular in stepped fashion.

6. Microscope according to Claim 1, **characterized in that** the spectral correction means (8) encompasses an interference filter (9) or a reflection filter that exhibits a differing spectral interference or reflection capability over its filter surfaces corresponding to working positions that can be arranged in the illumination beam path and **in that** the spectral transmittance of the filter (9) changes continuously or discontinuously, in particular in stepped fashion.

7. Microscope according to Claim 5 or 6, **characterized in that** a modification of the spectral intensity distribution of the light emitted by the light source (1) can be achieved by way of a motion of the spectral correction means (8) relative to the illumination beam path, preferably can be effected by way of a motor (10).

8. Method for modifying the light flux in a microscope that comprises a light source (1) having a control device, an illuminating optical system (2, 3, 4) and an aperture device (6) in an illumination beam path of the microscope,

   - the numerical aperture of the illuminating optical system (2, 3, 4) being modified with the aperture device (6), and
   - the intensity of the light emitted by the light source (1) being controlled with the control device of the light source (1),

   **characterized in that**

   - upon a modification of the numerical aperture by means of the aperture device (6), the light source (1) is simultaneously controlled by the control device of the light source (1) in such a way that the light flux which the illuminating optical system (2, 3, 4) passes through remains substantially unmodified; and
   - a modification of the spectral intensity distribution of the light emitted by the light source (1), brought about because of the controlling of the light source (1) by the control device of the light source (1), is corrected in such a way that the spectral intensity distribution of the light directed onto the specimen remains at least largely unmodified.

9. Method according to Claim 8, **characterized in that** at least a portion of the light flux passing through the illuminating optical system is detected and a signal dependent thereon is generated that is usable for open- or closed-loop control of the light source or for correction of the spectral intensity distribution of the light emitted by the light source (1).

10. Method according to Claim 8 or 9, **characterized in that** a modification of the spectral intensity distribution of the light emitted by the light source (1) is generated by the fact that a spectral correction means (8) is moved relative to the illumination beam path.

## Revendications

1. Microscope qui présente une source de lumière (1) avec un dispositif de commande associé, une optique d'éclairage (2, 3, 4) pour éclairer un objet et un dispositif d'ouverture (6) dans un trajet de faisceau d'éclairage, l'ouverture numérique de l'optique d'éclairage (2, 3, 4) pouvant être modifiée avec le dispositif d'ouverture (6) et l'intensité de la lumière émise par la source de lumière (1) pouvant être commandée avec le dispositif de commande de la source de lumière (1), **caractérisé en ce**

   - **que** lors de la modification de l'ouverture numérique par le dispositif d'ouverture (6), la source de lumière (1) peut simultanément être commandée par le dispositif de commande de la source de lumière (1) de telle sorte que le flux de lumière à travers l'optique d'éclairage (2, 3, 4) reste pour l'essentiel inchangé,
   - et en ce qu'un moyen de correction spectral (8) est disposé dans le trajet de faisceau d'éclairage ou de représentation avec lequel une modification de la distribution spectrale de l'intensité de la lumière émise par la source de lumière (1) provoquée du fait de la commande de la source de lumière (1) par le dispositif de commande peut être corrigée de telle sorte que la distribution spectrale de l'intensité de la lumière dirigée sur l'objet reste au moins pour l'essentiel inchangée.

2. Microscope selon la revendication 1, **caractérisé par** un détecteur photosensible disposé dans le trajet du faisceau du microscope, lequel détecte au moins une partie du flux de lumière qui passe à travers l'optique d'éclairage et génère un signal dépendant de celui-ci qui peut être utilisé pour commander ou réguler la source de lumière et/ou le moyen de correction spectral (8).

3. Microscope selon la revendication 1 ou 2, **caractérisé en ce que** le dispositif d'ouverture (6) comprend un diaphragme dont le diamètre de diaphragme est modifiable, de préférence actionnable par un moteur (7).

4. Microscope selon l'une des revendications 1 à 3, **caractérisé en ce que** la source de lumière (1) est alimentée avec de l'énergie électrique et **en ce que** le dispositif de commande de la source de lumière (1) modifie la puissance électrique acheminée à la source de lumière (1).

**5.** Microscope selon la revendication 1, **caractérisé en ce que** le moyen de correction spectral (8) comprend un filtre qui est réalisé sous la forme d'un filtre à absorption dont les positions actives pouvant être disposées dans le trajet du faisceau d'éclairage présentent à chaque fois des épaisseurs différentes et **en ce que** la capacité de transmission spectrale du filtre varie en fonction de l'épaisseur et **en ce que** la capacité de transmission spectrale du filtre (9) varie de manière continue ou discontinue, notamment par paliers.

**6.** Microscope selon la revendication 1, **caractérisé en ce que** le moyen de correction spectral (8) comprend un filtre à interférence (9) ou un filtre à réflexion qui, par le biais de ses surfaces de filtrage correspondant aux positions actives pouvant être disposées dans le trajet du faisceau d'éclairage, présente une capacité d'interférence ou de réflexion spectrale différente et **en ce que** la capacité de transmission spectrale du filtre (9) varie de manière continue ou discontinue, notamment par paliers.

**7.** Microscope selon l'une des revendications 5 à 6, **caractérisé en ce qu'**une modification de la distribution spectrale de l'intensité de la lumière émise par la source de lumière (1) peut être obtenue par un mouvement relatif du moyen de correction spectral (8) par rapport au trajet du faisceau d'éclairage, de préférence réalisable par un moteur (10).

**8.** Procédé pour modifier le flux de lumière dans un microscope qui présente une source de lumière (1) munie d'un dispositif de commande, d'une optique d'éclairage (2, 3, 4) et d'un dispositif d'ouverture (6) dans un trajet de faisceau d'éclairage du microscope,

- l'ouverture numérique de l'optique d'éclairage (2, 3, 4) étant modifiée avec le dispositif d'ouverture (6),
- et l'intensité de la lumière émise par la source de lumière (1) étant commandée par le dispositif de commande de la source de lumière (1),

**caractérisé en ce**

- **que** lors d'une modification de l'ouverture numérique par le dispositif d'ouverture (6), la source de lumière (1) est simultanément commandée par le dispositif de commande de la source de lumière (1) de telle sorte que le flux de lumière qui traverse l'optique d'éclairage (2, 3, 4) reste pour l'essentiel inchangé,
- et en ce qu'une modification de la distribution de l'intensité spectrale de la lumière émise par la source de lumière (1), provoquée du fait de la commande de la source de lumière (1) par le dispositif de commande de la source de lumière (1), est corrigée de telle sorte que la distribution spectrale de l'intensité de la lumière dirigée sur l'objet reste au moins pour l'essentiel inchangée.

**9.** Procédé selon la revendication 8, **caractérisé en ce qu'**au moins une partie du flux de lumière qui traverse l'optique d'éclairage est détectée et un signal qui en dépend est généré, lequel peut être utilisé pour commander ou réguler la source de lumière ou pour corriger la distribution de l'intensité spectrale de la lumière émise par la source de lumière (1).

**10.** Procédé selon l'une des revendications 8 à 9, **caractérisé en ce qu'**une modification de la distribution de l'intensité spectrale de la lumière émise par la source de lumière (1) est produite en déplaçant un moyen de correction spectral (8) par rapport au trajet du faisceau d'éclairage.

Fig.